# EUROPEAN PATENT APPLICATION

(11) **EP 4 822 870 A1**
(43) Date of publication of application: **14.10.2026**
(21) Application number: 24919734.4
(22) Date of filing: 12.09.2024
(51) Int. Cl.: H01M 50/449, H01M 50/454, H01M 50/489, H01M 50/491, H01M 10/05

(54) **COMPOSITE SEPARATOR AND PREPARATION METHOD THEREFOR, AND BATTERY AND ELECTRIC DEVICE**

(30) Priority: 24.01.2024 CN 202410102084
(71) Applicant: Contemporary Amperex Technology Co., Limited, Ningde, Fujian 352100 (CN)
(72) Inventor: WANG, Baoying, Ningde, Fujian 352100 (CN); YE, Yonghuang, Ningde, Fujian 352100 (CN)
(74) Representative: Lorenz Seidler Gossel Part. mbB
(86) International application number: PCT/CN2024/118515
(87) International publication number: WO 2025/156654

(57) **Abstract**

A composite separator and a preparation method therefor, and a battery and an electric device. The composite separator comprises a base membrane, wherein the base membrane has a first surface and a second surface arranged opposite each other, a non-woven fabric layer being provided on the first surface of the base membrane, the non-woven fabric layer comprising non-woven fabric material formed by polymer fibers, and the porosity of the non-woven fabric layer being at least 40%. The composite separator is used in the battery, the non-woven fabric layer being adjacent to a negative electrode sheet of the battery. The composite separator is formed by compounding the base membrane and the non-woven fabric formed by the polymer fibers, and when the composite separator is used in the battery, the non-woven fabric layer is close to the side of the negative electrode sheet; thus, on the basis of the characteristics of the non-woven fabric layer of the composite separator, the cycle stability, cycle life and safety of the battery are improved.

## Description

The present application claims priority to Chinese Patent Application No. 202410102084.3, filed with China National Intellectual Property Administration on January 24, 2024 and entitled "COMPOSITE SEPARATOR AND PREPARATION METHOD THEREFOR, BATTERY, AND ELECTRIC DEVICE", the content of which is incorporated herein by reference in its entirety.

### TECHNICAL FIELD

The present application pertains to the technical field of battery materials, and in particular, to a composite separator and a preparation method therefor, a battery, and an electric device.

### BACKGROUND

A battery separator film (BSF), also referred to as a battery separator, is one of the core materials in a battery. The separator film is disposed between the positive electrode plate and the negative electrode plate of the battery, and mainly functions to separate the positive electrode active substance from the negative electrode active substance of the battery to reduce the risk of a short circuit caused by contact between the two electrode plates, while allowing current-carrying ions to pass through to form a charging and discharging loop. Therefore, the separator film has a significant impact on the safety and costs of the battery.

During the charging and discharging process of a secondary battery, dendrite formation may occur at the negative electrode. For example, the growth of dendrites on the metal negative electrode easily pierces the separator film, thereby affecting the use performance and service life of the battery.

### SUMMARY

In view of the above problems, the present application provides a composite separator and a preparation method therefor, a battery, and an electric device, aiming to solve the technical problem of how to reduce the risk of dendrite growth on the negative electrode of the battery.

In a first aspect, embodiments of the present application provide a composite separator. The composite separator includes a base film, and the base film has a first surface and a second surface that are arranged opposite to each other. The first surface of the base film is provided with a non-woven fabric layer, the non-woven fabric layer includes a non-woven fabric material made of an organic polymer fiber, and a porosity of the non-woven fabric layer is at least 40%. The composite separator is used in a battery, and the non-woven fabric layer is adjacent to a negative electrode plate of the battery.

The composite separator is formed by laminating the base film and a non-woven fabric made of the organic polymer fiber. When the composite separator is used in a battery, the non-woven fabric layer is disposed proximal to the side of the negative electrode plate. In this way, when dendrite growth occurs on the negative electrode plate, the non-woven fabric made of the organic polymer fiber has a three-dimensional network fiber structure, which can provide a certain pre-growth space for the growth of dendrites on the negative electrode plate. Meanwhile, the three-dimensional network fiber structure of the non-woven fabric can disperse the metal deposition growth stress on the negative electrode plate in various directions, thereby changing the vertical growth state of dendrites from the surface of the negative electrode plate. That is, by controlling the metal deposition behavior, a uniform and dense deposition layer is formed on the surface of the negative electrode plate, thereby significantly reducing the risk of piercing the composite separator due to the continuous growth of dendrites. In addition, the non-woven fabric material made of the organic polymer fiber itself not only has good stability and is not prone to thermal runaway, but also has good air permeability and large pores, which facilitates electrolyte wetting and promotes the transport of ions. Therefore, when the composite separator of the embodiments of the present application is used in a battery, it is beneficial to improving the cycling stability, cycle life, and safety of the battery.

In some embodiments, the porosity of the non-woven fabric layer is 47% to 70%.

The non-woven fabric layer having a porosity of 47% to 70% can provide a sufficient pre-growth space for the growth of dendrites, while reducing the barrier for ions to pass through the non-woven fabric, thereby promoting the transport of ions.

In some embodiments, a thickness of the non-woven fabric layer is 10 µm to 35 µm; and/or
a thickness of the base film is 5 µm to 20 µm.

By selecting the thicknesses of the non-woven fabric layer and the base film, the composite separator formed by laminating the non-woven fabric layer and the base film can exhibit good mechanical properties, and the risk of dendrite growth on the negative electrode of the battery can be reduced.

In some embodiments, the organic polymer fiber includes at least one of a viscose fiber, an acetate fiber, a polyester fiber, a polypropylene fiber, and a polyimide fiber; and/or
a material of the base film includes polyolefin.

When the composite separator formed by combining the organic polymer fiber and the polyolefin described above is used in a battery, the non-woven fabric layer is disposed proximal to the side of the negative electrode plate, thereby achieving the effects of improving the cycling stability, cycle life, and safety of the battery.

In some embodiments, a first coating is provided between the first surface of the base film and the non-woven fabric layer, and/or the second surface of the base film is provided with a second coating. The first coating and the second coating independently include at least one of an organic nanomaterial, an inorganic nanomaterial, and an organic-inorganic composite nanomaterial.

By applying a coating containing a nanomaterial on one side or both sides of the base film, the overall mechanical strength of the composite separator can be enhanced. Therefore, based on the increase of the mechanical properties of the composite separator, the risk of piercing the composite separator due to dendrite growth is reduced, and the wettability with the electrolyte is improved. Further, particularly the first coating between the base film and the non-woven fabric layer can increase the bonding stability between the base film and the non-woven fabric layer. Meanwhile, the nanomaterial structure of the first coating can provide a secondary protection effect against dendrites, and, in combination with the non-woven fabric layer, can further change the deposition morphology of the dendrites, enabling uniform metal deposition at the interface, and further significantly reducing the risk of an internal short circuit of the battery.

In some embodiments, materials of the first coating and the second coating satisfy one or more of the following (1) to (3):
(1) the organic nanomaterial including at least one of an aromatic ring polymer, an aromatic heterocyclic polymer, an aramid fiber, and a polyurethane fiber;
(2) the inorganic nanomaterial including at least one of tin dioxide nanoparticles, silicon dioxide nanoparticles, and silver nanoparticles; and
(3) the organic-inorganic composite nanomaterial including at least one of a silicon-polyacrylic acid composite material, a silicon-polyacrylonitrile composite material, a tin-polyacrylic acid composite material, and a tin-polyacrylonitrile composite material.

On the basis that the first coating and the second coating enhance the mechanical strength of the composite separator and reduce the risk of piercing the composite separator due to dendrite growth, the coating can better modify the base film by further selecting the types of the organic nanomaterial, the inorganic nanomaterial, and the organic-inorganic composite nanomaterial in the coating.

In some embodiments, the first surface of the base film is provided with the first coating, and the second surface of the base film is provided with the second coating. The first coating includes the organic nanomaterial, and the second coating includes the inorganic nanomaterial.

The first surface of the base film proximal to the non-woven fabric layer is provided with the first coating containing the organic nanomaterial, and the second surface of the base film distal to the non-woven fabric layer is provided with the second coating containing the inorganic nanomaterial. In one aspect, based on good adhesiveness of the organic nanomaterial, the non-woven fabric layer can be more stably bonded to the base film and is not easily detached, and in another aspect, based on the good hardness and wear resistance of the inorganic nanomaterial, the composite separator can achieve better mechanical strength. Therefore, through the combination of the first coating and the second coating described above, the composite separator possesses a stable capability of preventing the risk of being pierced by dendrites.

In some embodiments, a pore size of the first coating is 0.2 µm to 2 µm; and/or
a pore size of the second coating is 0.2 µm to 2 µm.

By selecting the pore sizes of the first coating and the second coating, the composite separator can exhibit good wettability with the electrolyte, and meanwhile, the ion transport efficiency is improved.

In some embodiments, a porosity of the base film, the first coating, and the second coating as a whole is 28% to 46%; and/or
a thickness of the base film, the first coating, and the second coating as a whole is 7 µm to 25 µm.

The coatings are bonded to the surfaces of the base film to form an integral structure. By regulating the porosity and thickness of the base film and the coatings as a whole, the composite separator exhibits good mechanical properties and is beneficial to the transport of ions.

In some embodiments, the composite separator satisfies one or more of the following (1) to (5):
(1) a porosity of the composite separator being 38% to 55%;
(2) a Young's modulus of the composite separator in a length direction being 8 MPa to 15 MPa;
(3) a Young's modulus of the composite separator in a width direction being 6 MPa to 15 MPa;
(4) a thickness of the composite separator being 15 µm to 55 µm; and
(5) an air permeability of the composite separator being 260 s/100 CC to 390 s/100 CC.

By selecting the porosity, Young's modulus, air permeability, and thickness of the composite separator as a whole, the composite separator, when used in a battery, can better improve the cycling stability, cycle life, and safety of the battery.

In a second aspect, the embodiments of the present application provide a preparation method for the above composite separator. The preparation method includes the following step:
subjecting the first surface of the base film and the non-woven fabric layer to lamination treatment to obtain the composite separator.

According to the present application, the base film and the non-woven fabric are subjected to the lamination treatment to obtain the composite separator. The process is simple, and the prepared composite separator has good stability and is beneficial to the transport of ions. When the composite separator is used in a battery, since the non-woven fabric layer is disposed proximal to the side of the negative electrode plate, the risk of piercing the composite separator due to the continuous growth of dendrites on the negative electrode plate can be significantly reduced. Therefore, the composite separator prepared in this way can improve the cycling stability, cycle life, and safety of the battery.

In some embodiments, before the first surface of the base film and the non-woven fabric layer are subjected to the lamination treatment, the preparation method further includes: coating the first surface of the base film with a first slurry containing at least one of the organic nanomaterial, the inorganic nanomaterial, and the organic-inorganic composite nanomaterial to obtain the first coating; and/or
before or after the first surface of the base film and the non-woven fabric layer are subjected to the lamination treatment, the preparation method further includes: coating the second surface of the base film with a second slurry containing at least one of the organic nanomaterial, the inorganic nanomaterial, and the organic-inorganic composite nanomaterial to obtain the second coating.

By preparing the coating on at least one surface of the base film, the mechanical strength of the composite separator can be enhanced, and the risk of piercing the composite separator due to dendrite growth can be further reduced.

In a third aspect, the embodiments of the present application provide a battery. The battery includes a positive electrode plate, a negative electrode plate, and a separator film disposed between the positive electrode plate and the negative electrode plate. The separator film includes the composite separator provided in the first aspect of the embodiments of the present application and/or a composite separator prepared by using the preparation method provided in the second aspect of the embodiments of the present application, and the non-woven fabric layer in the composite separator is disposed between the base film and the negative electrode plate.

By using the composite separator provided in the first aspect of the embodiments of the present application and/or the composite separator prepared by using the preparation method provided in the second aspect of the embodiments of the present application in a battery, on the basis that the composite separator has good stability, is beneficial to the transport of ions, and significantly reduces the risk of piercing the composite separator due to the continuous growth of dendrites on the negative electrode plate, the battery can achieve good cycling stability, cycle life, and safety.

In some embodiments, the battery is a metal battery.

In the metal battery, no intercalation-type negative electrode active material is added to the negative electrode plate, and metal deposition occurs on the negative electrode current collector. Due to the high reactivity of metals, uneven deposition is likely to occur, resulting in excessively large local current density, and thus promoting the growth of dendrites. However, the composite separator according to the embodiments of the present application can well prevent the risk of being pierced by dendrites grown on the surface of the negative electrode plate of the metal battery. Therefore, such a battery has the characteristics of high energy density, good cycle performance, and long service life.

In some embodiments, the battery includes at least two electrode assemblies, and no buffer pad is provided between adjacent electrode assemblies.

At the initial stage of charging and discharging of the battery, metal deposition tends to cause squeezing between the electrode assemblies. Therefore, a compressible buffer pad is generally required to prevent an internal short circuit of the battery caused by the squeezing of adjacent electrode assemblies. However, in the embodiments of the present application, since the non-woven fabric is added to the composite separator, which provides a certain stress buffering effect, good safety performance can still be achieved without the need to provide a buffer pad, thereby further reducing battery costs.

In a fourth aspect, the embodiments of the present application provide an electric device. The electric device includes the battery provided in the third aspect of the present application.

By using the battery provided in the third aspect of the embodiments of the present application, the electric device has good cycle performance and service life, and can work for a longer time.

The above description is only an overview of the technical solutions of the present application. To more clearly understand the technical means of the present application to enable implementation in accordance with the content of the specification, and to make the above and other purposes, features, and advantages of the present application more apparent and easy to understand, specific implementations of the present application are described in detail below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a schematic structural diagram of a composite separator according to an embodiment of the present application;
FIG. 2 is a schematic structural diagram of a composite separator according to another embodiment of the present application;
FIG. 3 is a schematic structural diagram of a composite separator according to yet another embodiment of the present application;
FIG. 4 is a schematic structural diagram of a composite separator according to still another embodiment of the present application;
FIG. 5 is a scanning electron microscope (SEM) image of a composite separator prepared according to an embodiment of the present application;
FIG. 6 is a schematic structural diagram of an implementation of a secondary battery according to an embodiment of the present application;
FIG. 7 is an exploded schematic diagram of the secondary battery shown in FIG. 6;
FIG. 8 is a schematic structural diagram of an implementation of a battery module according to an embodiment of the present application;
FIG. 9 is a schematic structural diagram of an implementation of a battery pack according to an embodiment of the present application;
FIG. 10 is a schematic diagram of an exploded structure of the battery pack shown in FIG. 9; and
FIG. 11 is a schematic diagram of an implementation of an electric device including the battery according to an embodiment of the present application as a power source.

### Description of the reference numerals:

11-base film; 12-non-woven fabric layer; 13-first coating; 14-second coating;
20-battery cell; 21-housing; 22-top cover assembly; 23-electrode assembly; 30-battery module; 40-battery pack; 41-upper case body; 42-lower case body.

### DETAILED DESCRIPTION

Embodiments of the technical solutions of the present application will be described in detail below with reference to the drawings. The following embodiments are merely used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces. "At least one" means no less than one (including one, two, three, etc.).

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential", and the like indicate orientations or positional relationships based on those shown in the drawings. They are merely for the convenience of describing the embodiments of the present application and simplifying the description, rather than indicating or implying that the apparatus or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

Against the backdrop of the era of energy conservation and emission reduction, new energy technologies have developed rapidly, with research breakthroughs and applications in battery technology being particularly prominent. The separator film is one of the core materials in a battery. The separator film is disposed between the positive electrode plate and the negative electrode plate of the battery, and mainly functions to separate the positive electrode active substance from the negative electrode active substance of the battery to reduce the risk of a short circuit caused by contact between the two electrode plates, while allowing current-carrying ions to pass through to form a charging and discharging loop. Therefore, the separator film has a significant impact on the safety and costs of the battery.

Secondary batteries, also referred to as rechargeable batteries, refer to batteries that can continue to be used by reactivating their active substances through charging after discharging. During the charging and discharging process of secondary batteries, there is a risk of dendrite growth on the negative electrode. For example, in a metal battery (also referred to as a metal battery without an intercalation-type negative electrode active material), metal deposition occurs on the electrode plate serving as the negative electrode. Due to the high reactivity of metals, uneven deposition is likely to occur, resulting in excessively large local current density, and thus promoting the growth of dendrites due to a "tip effect". If dendrites are allowed to grow, the dendrites finally pierce the separator, leading to a short circuit and battery failure. Therefore, it is necessary to improve the dendrite growth state to reduce or even eliminate the risk posed by the growth of dendrites.

Currently, the materials of the base film of the separator commonly used in commercial batteries have a single structure. For example, commonly used polymer substrates such as polyethylene (PE) and polypropylene (PP) polyolefin base films exhibit a unidirectional transverse or longitudinal stretching structure due to synthesis processes. Such base films are prone to short circuiting when used in metal batteries and therefore generally require surface coating modification. Although the non-woven fabric has a three-dimensional network structure, due to the large porosity of the non-woven fabric, a single organic non-woven fabric material serving as the separator cannot effectively prevent dendrite piercing. Consequently, the organic non-woven fabric material is rarely used alone in metal batteries and generally needs to be modified with an inorganic filler. Since a single separator base film material is prone to short circuiting in a battery, a single organic non-woven fabric material is also prone to short circuiting, and the base film material and the organic non-woven fabric material have different material processes and are generally modified by coating, it is difficult to conceive of laminating the base film material and the organic non-woven fabric material to form a composite separator.

Currently, there are separator modifications by coating modification. For example, the surface of the commonly used separator base film or the commonly used non-woven fabric described above is coated with a modification coating to form a composite separator. Although this can enhance the mechanical properties of the composite separator, the capability to change or control the growth state of dendrites is limited. Moreover, the modification coating is generally thick, which in turn reduces the energy density of the battery.

Based on the above considerations, in order to reduce the risk posed by the growth of dendrites, the embodiments of the present application provide a composite separator, in which the current base film and organic non-woven fabric are laminated to form a composite separator. During use, the non-woven fabric layer of the composite separator is disposed proximal to the side of the negative electrode plate of the battery. In this way, when dendrite growth occurs on the negative electrode plate, based on the physicochemical properties of the non-woven fabric, the composite separator formed by laminating with the base film can significantly reduce the risk posed by the continuous growth of dendrites. The following technical solutions are thereby proposed.

### Composite separator and preparation method therefor

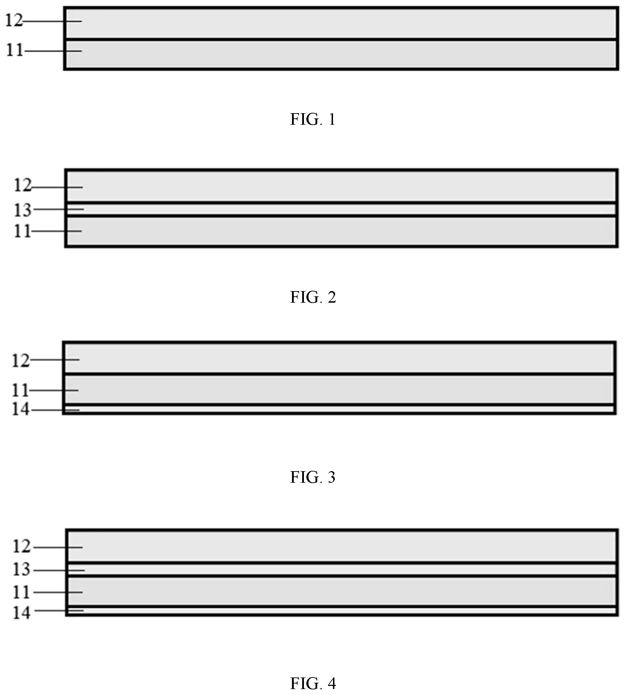

In a first aspect, the embodiments of the present application provide a composite separator. As a summary of some embodiments of the present application, as shown in FIGs. 1 to 4, the composite separator includes a base film 11 and a non-woven fabric layer 12. The base film 11 has a first surface and a second surface that are arranged opposite to each other, and the non-woven fabric layer 12 is disposed on the first surface of the base film 11 and is combined with the base film 11. When the composite separator of the embodiments of the present application is used in a battery, the non-woven fabric layer 12 on the first surface of the base film 11 is disposed proximal to the side of the negative electrode plate.

The base film 11 refers to a base film made of a separator substrate and is a porous film made of a polymer substrate. The base film having a porous structure, which is made of a polymer substrate, can satisfy the mechanical properties required by the battery separator and function to allow ions to pass through.

The non-woven fabric layer 12 is a layer of non-woven fabric material made of an organic polymer fiber. The non-woven fabric, also referred to as a non-woven cloth or needle-punched cotton, is generally manufactured by a needling process. In one aspect, the non-woven fabric has a three-dimensional network fiber structure with large pores, good air permeability, and good wettability with respect to an electrolyte. When the non-woven fabric is laminated with the base film 11, it does not affect the ion transport efficiency between the positive electrode plate and the negative electrode plate of the battery. In another aspect, the non-woven fabric has good thermal stability and mechanical stability, which is not prone to failure at high temperatures. Meanwhile, the porosity of the non-woven fabric layer 12 is at least 40%. The non-woven fabric can provide a space for metal deposition during initial charging, and change the growth direction of dendrites through the steric hindrance, such that the risk posed by the growth of dendrites on the negative electrode plate can be reduced.

Based on this, in the embodiments of the present application, the base film 11 and the non-woven fabric layer 12 made of an organic polymer fiber are laminated to form a composite separator, and when the composite separator is used in a battery, the non-woven fabric layer 12 is disposed proximal to the side of the negative electrode plate of the battery. When dendrite growth occurs on the negative electrode plate, the non-woven fabric layer 12 with a certain level of porosity has a three-dimensional network fiber structure, which provides a "pre-growth" space for dendrites. After nucleation and deposition occur on the surface of the negative electrode plate, dendrites gradually grow in a direction away from the electrode plate substrate into the three-dimensional network frame of the non-woven fabric. Since the initial metal growth stress is relatively large, the non-woven fabric provides the "pre-growth" space for the metal, and meanwhile, the base film of the composite separator has certain mechanical properties, such that the composite separator can allow dendrites to grow while avoiding the risk that dendrite tips may pierce the separator due to the continuous growth of dendrites. Moreover, the mesh-like pores of the non-woven fabric change the vertical growth state of dendrites. By controlling the metal deposition behavior, the growth stress is dispersed in various directions, the deposition morphology is shaped, and finally a blocky, uniform, and dense deposition layer is formed. Meanwhile, due to the good intrinsic stability of the organic non-woven fabric material, it is beneficial to electrolyte wetting and the transport of ions. Therefore, when the composite separator of the embodiments of the present application is used in a battery, it is beneficial to improving the cycling stability, cycle life, and safety of the battery.

In some embodiments, the porosity of the non-woven fabric layer 12 is 47% to 70%, and illustratively, the porosity may be 48%, 50%, 55%, 58%, 60%, 62%, 67%, 68%, 70%, or the like. Porosity refers to the percentage of the pore volume in a porous material to the total volume of the material in its natural state. The ratio of the total volume of interconnected micro voids in a porous material to the bulk volume of the porous material is referred to as the effective porosity, and the ratio of the total volume of all interconnected and noninterconnected micro voids in a porous material to the bulk volume of the porous medium is referred to as the absolute porosity or the total porosity. The porosity in the embodiments of the present application may refer to the effective porosity, and for the measurement of the porosity, reference may be made to the national standard GB/T 24586-2009. If the porosity of the non-woven fabric layer 12 is excessively low, the barrier for ions to pass through the non-woven fabric is increased, thereby increasing the difficulty of ion transport; if the porosity is excessively high, the "anchoring" effect of the network structure of the non-woven fabric layer 12 on the deposited metal is reduced, making it difficult to provide a sufficient metal "pre-growth" space. The non-woven fabric layer 12 having a porosity of 40% to 70% can provide a sufficient pre-growth space for the growth of dendrites on the negative electrode plate, while better reducing the barrier for ions to pass through the non-woven fabric, thereby promoting the transport of ions. Specifically, the porosity of the non-woven fabric layer 12 may be 48% to 56%.

In some embodiments, the thickness of the non-woven fabric layer 12 is 10 µm to 35 µm, and illustratively, the thickness may be 10 µm, 12 µm, 15 µm, 18 µm, 20 µm, 22 µm, 15 µm, 28 µm, 30 µm, 32 µm, 35 µm, or the like. If the thickness of the non-woven fabric layer 12 is excessively large, the barrier for ions to pass through the non-woven fabric is increased, thereby increasing the difficulty of ion transport; if the thickness is excessively small, the "anchoring" effect of the network structure of the non-woven fabric layer 12 on the deposited metal is reduced, making it difficult to provide a sufficient metal "pre-growth" space. The non-woven fabric layer 12 having a thickness of 10 µm to 35 µm can provide a sufficient pre-growth space for the growth of dendrites on the negative electrode plate, while better reducing the barrier for ions to pass through the non-woven fabric, thereby promoting the transport of ions. Specifically, the thickness of the non-woven fabric layer 12 may be 15 µm to 18 µm.

In some embodiments, the air permeability of the non-woven fabric layer 12 is 5 s/100 CC to 16 s/100 CC, and illustratively, the air permeability may be 5 s/100 CC, 8 s/100 CC, 10 s/100 CC, 12 s/100 CC, 14 s/100 CC, 16 s/100 CC, or the like. Air permeability refers to the degree to which an object or medium allows gas to pass through under certain conditions. For the measurement of the air permeability in the embodiments of the present application, reference is made to the international standard GB/T 458-2008. The non-woven fabric layer 12 that satisfies the above air permeability can well achieve the effect that the non-woven fabric layer 12 in the embodiments of the present application reduces the risk of piercing the composite separator due to the continuous growth of dendrites. Specifically, the air permeability of the non-woven fabric layer 12 may be 6 s/100 CC to 10 s/100 CC.

In some embodiments, the non-woven fabric material of the non-woven fabric layer 12 is an organic polymer fiber, which includes at least one of a viscose fiber, an acetate fiber, a polyester fiber, a polypropylene fiber, and a polyimide fiber. The above non-woven fabric material can well form the non-woven fabric layer 12 required in the embodiments of the present application. Specifically, the non-woven fabric material of the non-woven fabric layer 12 includes a polyester fiber. The polyester fiber not only has excellent mechanical properties, thermal stability, and electrical insulation, facilitating efficient and stable migration of ions, but also has higher compatibility between the R-COO-R groups in the polyester fiber and the electrolyte, further improving the electrolyte retention capability. Illustratively, the polyester fiber may be polyethylene terephthalate.

In some embodiments, the non-woven fabric material of the non-woven fabric layer 12 is a polyester fiber, and the non-woven fabric layer 12 has a porosity of 48% to 56%, an air permeability of 6 s/100 CC to 10 s/100 CC, and a thickness of 15 µm to 18 µm. The composite separator formed under these conditions has better comprehensive performance.

In some embodiments, the surface of the base film 11 is provided with a coating containing a nanomaterial. Specifically, as shown in FIG. 2, the first surface of the base film 11 proximal to the non-woven fabric layer 12 is provided with a first coating 13. Alternatively, as shown in FIG. 3, the second surface of the base film 11 distal to the non-woven fabric layer 12 is provided with a second coating 14. Alternatively, as shown in FIG. 4, the first surface of the base film 11 proximal to the non-woven fabric layer 12 is provided with the first coating 13, and the second surface of the base film 11 distal to the non-woven fabric layer 12 is provided with the second coating 14. By applying a coating containing a nanomaterial on one side or both sides of the base film 11, the overall mechanical strength of the composite separator can be enhanced, thereby increasing the mechanical properties of the composite separator, and further reducing the risk of piercing the composite separator due to dendrite growth. Meanwhile, the first coating 13 and the second coating 14 are coatings containing nanomaterials and have certain pores, thereby facilitating improving the wettability with the electrolyte.

The first coating 13 includes at least one of an organic nanomaterial, an inorganic nanomaterial, and an organic-inorganic composite nanomaterial. The second coating 14 includes at least one of an organic nanomaterial, an inorganic nanomaterial, and an organic-inorganic composite nanomaterial. By selecting the types of the organic nanomaterial, the inorganic nanomaterial, and the organic-inorganic composite nanomaterial in the coating, the coating can better modify the base film 11.

Taking the first coating 13 as an example, the first coating 13 between the base film 11 and the non-woven fabric layer 12 can increase the bonding stability between the base film 11 and the non-woven fabric layer 12. Meanwhile, the nanomaterial structure of the first coating 13 can provide a secondary protection effect against the dendrites, and, in combination with the non-woven fabric layer 12, can further change the deposition morphology of the dendrites, which is beneficial for the first coating 13 to construct a suitable SEI layer, so as to inhibit the growth of the dendrites or eliminate the dendrites, thereby forming a uniform deposition interface, further preventing the dendrites from piercing the composite separator, and significantly reducing the risk of an internal short circuit of the battery.

In some embodiments, the organic nanomaterial includes at least one of an aromatic ring polymer, an aromatic heterocyclic polymer, an aramid fiber, and a polyurethane fiber. Illustratively, the aromatic ring polymer may include at least one of polyethylene terephthalate or polybutylene terephthalate. The aromatic heterocyclic polymer may include at least one of polyaniline, polyimide, polybiphenyltetracarboximide, or biphenyltetracarboxylic dianhydride. The aramid fiber may include at least one of a polyphenylene sulfide fiber, a polyphenylene ether ketone fiber, or a polyterephthalamide fiber. The polyurethane fiber may include polyurethane. Specifically, the organic nanomaterial includes an aramid fiber. The aramid fiber has good heat resistance and adhesiveness, improving the stability and strength of the composite separator, while enhancing the electrolyte absorption capability of the composite separator to improve the wettability and conductive performance. The combination of the nanostructured pores of the aramid fiber and the non-woven fabric layer 12 can better provide a secondary protection effect against the dendrites, thereby improving the "shuttle effect" of the metal.

In some embodiments, the inorganic nanomaterial includes at least one of tin dioxide nanoparticles, silicon dioxide nanoparticles, and silver nanoparticles. Specifically, the inorganic nanomaterial includes silicon dioxide nanoparticles; silicon dioxide not only has good thermal stability, but also can increase the wettability and electrolyte retention property of the separator. Meanwhile, the inorganic nanomaterial forms an interconnected surface structure with the base film 11, which can make the base film 11 and the coating more stable, such that the overall mechanical properties of the composite separator can be better improved. In addition, the inorganic nanomaterial may react with a metal to form an alloy, for example, reacting with Na metal to form NaₓSn_{y}/NaₓSi_{y}, such that the ion flux can be effectively distributed, the wettability with the electrolyte is enhanced, and sodium ions are uniformly distributed and nucleated.

In some embodiments, the organic-inorganic composite nanomaterial includes at least one of a silicon-polyacrylic acid (Si-PAA) composite material, a silicon-polyacrylonitrile (Si-PAN) composite material, a tin-polyacrylic acid (Sn-PAA) composite material, and a tin-polyacrylonitrile (Sn-PAN) composite material. The organic-inorganic composite nanomaterials of the above types may also react with metals to form ion conductors, for example, reacting with Na metal to form NaₓSn_{y}/NaₓSi_{y} and NaPAA/NaPAN ion conductors, such that the ion flux can be effectively distributed, the wettability with the electrolyte is enhanced, and sodium ions are uniformly distributed and nucleated. Specifically, the organic-inorganic composite nanomaterial includes a tin-polyacrylonitrile composite material. Sn and Na metals have strong reactivity, and PAN can better enhance the wettability with the electrolyte.

The materials and related parameters of the first coating 13 and the second coating 14 may be the same or different.

In some embodiments, the first surface of the base film 11 proximal to the non-woven fabric layer 12 is provided with the first coating 13, and the second surface of the base film 11 distal to the non-woven fabric layer 12 is provided with the second coating 14. The first coating 13 includes the above organic nanomaterial, and the second coating 14 includes the above inorganic nanomaterial or organic-inorganic composite nanomaterial. In one aspect, based on the good adhesiveness of the organic nanomaterial of the first coating 13, the non-woven fabric layer 12 can be more stably bonded to the base film 11 and is not easily detached. In addition, the strength of the crosslink structure and the nanopore size of the organic nanomaterial can block the growth of dendrites, and more easily change the original vertical growth state of the dendrites to a horizontal growth state. In another aspect, based on the good hardness and wear resistance of the inorganic nanomaterial of the second coating 14, the composite separator can achieve better mechanical strength. Meanwhile, the inorganic nanomaterial or the organic-inorganic composite nanomaterial reacts with metals such as sodium or potassium to perform a "sodiumabsorbing" or "potassium-absorbing" effect, thereby effectively distributing the ion flux. Therefore, through the combination of the first coating 13 and the second coating 14 described above, the composite separator possesses a stable capability of preventing the risk of being pierced by dendrites.

In some embodiments, the pore size of the first coating 13 is 0.2 µm to 2 µm. In another embodiment, the pore size of the second coating 14 is 0.2 µm to 2 µm. The pore size of a coating refers to the size of the pores formed by the interlaced arrangement of material fibers or particles in the coating, which may also be referred to as a pore throat. Illustratively, the pore size of the first coating 13 may be 0.2 µm, 0.4 µm, 0.6 µm, 0.8 µm, 1 µm, 1.2 µm, 1.4 µm, 1.8 µm, or 2.0 µm; the pore size of the second coating 14 may be 0.2 µm, 0.4 µm, 0.6 µm, 0.8 µm, 1 µm, 1.2 µm, 1.4 µm, 1.8 µm, or 2.0 µm.

The first coating 13 and the second coating 14 are nanomaterial coatings. After the nanomaterials form the coatings, pores, i.e., gaps of pores, exist on the surfaces, which may also be referred to as pore throats. By selecting the pore sizes of the first coating 13 and the second coating 14, the composite separator can exhibit good wettability with the electrolyte, and meanwhile, the ion transport efficiency is improved. Specifically, the pore size of the first coating is 0.2 µm to 1 µm, and the pore size of the second coating is 0.2 µm to 1 µm.

In some embodiments, the material of the base film 11 includes polyolefin, for example, including one or more of PE, PP, and PP/PE/PP multi-layer microporous separators, and the thickness of the base film 11 may be 5 µm to 20 µm. The first coating 13 and the second coating 14 may each have a thickness of 1 µm to 2 µm, and the thickness of the base film 11, the first coating 13, and the second coating 14 as a whole is 7 µm to 25 µm, such as 7 µm to 16 µm.

In some embodiments, the porosity of the base film 11, the first coating 13, and the second coating 14 as a whole is 28% to 46%. When only one surface of the base film is provided with a coating, the overall porosity of the base film and the coating on the surface is 28% to 46%; when two surfaces of the base film are provided with coatings, the overall porosity of the base film and the coatings on the two opposite surfaces is 28% to 46%. Illustratively, the overall porosity may be 28%, 30%, 34%, 38%, 40%, 42%, 45%, or the like. The base film 11 modified under these conditions exhibits good mechanical properties and is beneficial to the transport of ions.

In some embodiments, the air permeability of the base film 11, the first coating 13, and the second coating 14 as a whole is 245 s/100 CC to 270 s/100 CC, and illustratively, the air permeability may be 245 s/100 CC, 8 s/100 CC, 250 s/100 CC, 257 s/100 CC, 260 s/100 CC, 265 s/100 CC, 270 s/100 CC, or the like. The base film 11 modified under these conditions satisfies the requirements of the composite separator in the battery.

In some embodiments, the base film 11, the first coating 13, and the second coating 14 as a whole have a porosity of 35% to 40%, an air permeability of 255 s/100 CC to 260 s/100 CC, and a thickness of 15 µm to 16 µm. The coatings are bonded to the surfaces of the base film 11 to form an integral structure. By regulating the porosity, air permeability, and thickness of the base film 11 and the coatings as a whole, the composite separator formed by laminating the integral structure with the non-woven fabric exhibits good mechanical properties and is beneficial to the transport of ions.

In some embodiments, the porosity of the base film 11, the first coating 13, and the second coating 14 as a whole is lower than the porosity of the non-woven fabric layer 12. For example, the porosity of the base film 11, the first coating 13, and the second coating 14 as a whole is 32% to 46%, and the porosity of the non-woven fabric layer 12 is 48% to 56%. The non-woven fabric layer 12 is disposed proximal to the side of the negative electrode of the battery and has a higher porosity, which provides a relatively large space for the initial blocky metal. The base film disposed proximal to the side of the positive electrode of the battery has a lower porosity, which can regulate the state and direction of dendrite growth at the tip. Since dendrites at the tip are softer, the dense network structure more easily disperses the stress of the vertical growth of the dendrites, thereby causing the dendrites to grow in the horizontal direction.

In the embodiments of the present application, by regulating the material types, porosities, and thicknesses of the non-woven fabric layer 12 and the coating (including the first coating 13 and/or the second coating 14), the dendrite growth state of the metal battery can be improved, and the risk of a short circuit of the battery caused by the dendrite tips can be reduced, thereby achieving excellent cycling stability, cycle life, and safety.

In some embodiments, the porosity of the composite separator is 38% to 55%, and illustratively, the porosity may be 38%, 40%, 42%, 45%, 48%, 50%, 55%, or the like. The composite separator having the above porosity can be highly favorable for the transport of ions.

In some embodiments, the Young's modulus of the composite separator in the length direction is 8 MPa to 15 MPa, for example, 8 MPa, 10 MPa, 12 MPa, 15 MPa, or the like; the Young's modulus of the composite separator in the width direction is 6 MPa to 15 MPa, for example, 6 MPa, 8 MPa, 10 MPa, 12 MPa, 15 MPa, or the like. The Young's modulus is a physical quantity that describes the capability of a solid material to resist deformation. The Young's modulus, also referred to as a tensile modulus, is one of the most common types of elastic modulus or modulus of elasticity. For the test method for the Young's modulus of the composite separator in the embodiments of the present application, reference is made to the national standard GB/T7757-2009. The composite separator reaction formed with the above Young's modulus parameters exhibits good mechanical properties and can be suitably used in batteries.

In some embodiments, the thickness of the composite separator is 15 µm to 55 µm, for example, 15 µm, 18 µm, 20 µm, 22 µm, 24 µm, 25 µm, 28 µm, 30 µm, 32 µm, 34 µm, 35 µm, 38 µm, 40 µm, 42 µm, 45 µm, 48 µm, 50 µm, 52 µm, 55 µm, or the like. The above total thickness of the composite separator is formed by the thicknesses of the base film 11 (or in combination with a coating, such as the first coating 13 and/or the second coating 14) and the non-woven fabric layer 12, which has little influence on the energy density of the battery, and can also significantly reduce the risk posed by the continuous growth of dendrites on the negative electrode plate.

In some embodiments, the composite separator has a porosity of 40% to 45%, a Young's modulus in the length direction of 9.5 MPa to 14 MPa, a Young's modulus in the width direction of 7.5 MPa to 14 MPa, and a total thickness of 25 µm to 34 µm. Specifically, the total air permeability of the composite separator may be 260 s/100 CC to 390 s/100 CC.

In some embodiments, according to the requirements of the battery, on the basis that the first surface of the base film is provided with a non-woven fabric layer, the same or a different non-woven fabric layer may also be provided on the second surface of the base film, and the specific material, thickness, and porosity of the non-woven fabric layer on the second surface may be selected with reference to the non-woven fabric layer on the first surface. When the second surface is not provided with a second coating, a non-woven fabric layer is directly added to the second surface of the base film. When the second surface of the base film is provided with a second coating, a non-woven fabric layer is added to the second coating. The case where the second surface of the base film is provided with a non-woven fabric layer also falls within the protection scope of the technical solutions of the present application.

In a second aspect, the embodiments of the present application provide a preparation method for the above composite separator. The preparation method includes the following step:
subjecting the first surface of the base film 11 and the non-woven fabric layer 12 to lamination treatment to obtain the composite separator.

According to the embodiments of the present application, the base film 11 and the non-woven fabric layer 12 are subjected to the lamination treatment to obtain the composite separator. The process is simple, and the prepared composite separator has good stability and is beneficial to the transport of ions. When the composite separator is used in a battery, since the non-woven fabric layer is disposed proximal to the side of the negative electrode plate, the risk of piercing the composite separator due to the continuous growth of dendrites on the negative electrode plate can be significantly reduced. Therefore, the composite separator prepared in this way can improve the cycling stability, cycle life, and safety of the battery.

In some embodiments, before the first surface of the base film 11 and the non-woven fabric layer 12 are subjected to the lamination treatment, the preparation method further includes: coating the first surface of the base film 11 proximal to the non-woven fabric layer 12 with a first slurry containing at least one of the organic nanomaterial, the inorganic nanomaterial, and the organic-inorganic composite nanomaterial to obtain the first coating 13. That is, the aforementioned first coating 13 is prepared on the first surface of the base film 11.

Alternatively, before or after the first surface of the base film 11 and the non-woven fabric layer 12 are subjected to the lamination treatment, the preparation method further includes: coating the second surface of the base film 11 distal to the non-woven fabric layer 12 with a second slurry containing at least one of the organic nanomaterial, the inorganic nanomaterial, and the organic-inorganic composite nanomaterial to obtain the second coating 14. That is, the aforementioned second coating 14 is prepared on the second surface of the base film 11.

Alternatively, the first surface of the base film 11 proximal to the non-woven fabric layer 12 is coated with a first slurry containing at least one of the organic nanomaterial, the inorganic nanomaterial, and the organic-inorganic composite nanomaterial to obtain the first coating 13, and the second surface of the base film 11 distal to the non-woven fabric layer 12 is coated with a second slurry containing at least one of the organic nanomaterial, the inorganic nanomaterial, and the organic-inorganic composite nanomaterial to obtain the second coating 14. That is, the first coating 13 and the second coating 14 mentioned above are prepared on the two surfaces of the base film 11.

By preparing the coating on at least one surface of the base film, the mechanical strength of the composite separator can be enhanced, and the risk of piercing the composite separator due to dendrite growth can be further reduced. The specific material selection and formation parameters of the first coating 13 and the second coating 14 are as described above.

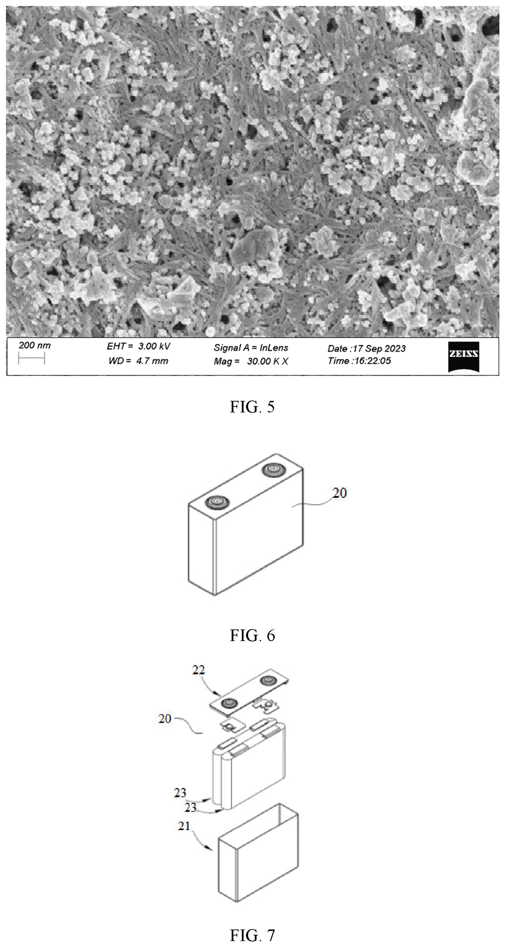

FIG. 5 is an SEM image of a composite separator prepared in an embodiment, where a non-woven fabric layer material having a three-dimensional network fiber knot is bonded to the surface of the base film.

In some embodiments, the lamination treatment includes a roller pressing lamination treatment, and the manner of coating may be spraying.

### Battery

In a third aspect, the embodiments of the present application provide a battery. The battery includes a positive electrode plate, a negative electrode plate, and a separator disposed between the positive electrode plate and the negative electrode plate, and the separator is the composite separator provided in the first aspect of the embodiments of the present application and/or a composite separator prepared by using the preparation method provided in the second aspect of the embodiments of the present application.

When the composite separator provided in the first aspect of the embodiments of the present application and/or the composite separator prepared by using the preparation method provided in the second aspect of the embodiments of the present application is used in a battery, the non-woven fabric layer 12 in the composite separator is disposed between the base film 11 and the negative electrode plate. On the basis that the composite separator has good stability, is beneficial to the transport of ions, and significantly reduces the risk of piercing the composite separator due to the continuous growth of dendrites on the negative electrode plate, the battery can achieve good cycling stability, cycle life, and safety.

In some embodiments, the battery is a secondary battery. In an exemplary embodiment, the secondary battery may be a lithium metal battery, a sodium metal battery, or the like, and the secondary battery according to the embodiments of the present application has high energy density and good cycling stability, and is suitably used as a power source of a power battery or an energy storage system based on the advantages of the composite separator according to the embodiments of the present application.

In some embodiments, the battery includes a plurality of electrode assemblies, for example, at least two electrode assemblies, and one electrode assembly includes a positive electrode plate, a composite separator, and a negative electrode plate that are stacked. No buffer pad is provided between adjacent electrode assemblies. Specifically, for a metal battery without an intercalation-type negative electrode active material, metal deposition occurs on the negative electrode plate, which causes a relatively large rebound of the negative electrode plate. Therefore, for example, a certain space for metal deposition is generally reserved to prevent the rebound. However, if a relatively large gap is directly reserved inside a cell during the production of the cell, the initial metal deposition process is free from mechanical constraint until the deposited metal expands to a certain extent that it comes into contact with the top case of the cell, which may easily cause an internal short circuit. The function of adding a buffer pad (having a certain compression amount) is to apply a small shaping force during the initial metal deposition, thereby preventing uncontrolled dendrite growth that may pierce the separator. In this case, the internal space of the non-woven fabric can replace the buffer pad. In the embodiments of the present application, since the non-woven fabric is added to the composite separator, which provides a certain stress buffering effect, good safety performance can still be achieved without the need to provide a buffer pad, thereby further reducing battery costs.

In some embodiments, the battery is a metal battery. The metal battery refers to a battery in which the negative electrode plate does not contain an intercalation-type negative electrode active material such as carbon/silicon, but active metals are formed on the surface of the negative electrode plate after recycling. For example, the metal battery is a lithium metal battery, a sodium metal battery, or the like. Since the negative electrode plate does not contain the intercalation-type negative electrode active material such as carbon/silicon, metal deposition occurs on the negative electrode current collector. Due to the high reactivity of metals, nonuniform metal deposition is likely to occur, resulting in excessively large local current density. The composite separator according to the embodiments of the present application can well prevent the risk of being pierced by dendrites on the surface of the negative electrode plate of the metal battery. Therefore, such a battery has the characteristics of high energy density, good cycle performance, and long service life.

The negative electrode plate of the metal battery may be the negative electrode current collector serving as the negative electrode plate. For example, a metal foil or a composite current collector may be used. For example, as the metal foil, an aluminum foil or a copper foil may be used.

In some embodiments, the positive electrode plate includes a positive electrode current collector and a positive electrode active layer bonded on the positive electrode current collector. The positive electrode active layer contains a positive electrode active material. When the secondary battery is a lithium metal battery, the positive electrode active material is a lithium-containing material, and when the secondary battery is a sodium metal battery, the positive electrode active material is a sodium-containing material.

In some embodiments, the current collector of the positive electrode plate is also referred to as a positive electrode current collector, and a metal foil or a composite current collector may be used as the positive electrode current collector. For example, as the metal foil, an aluminum foil may be used. The composite current collector may include a polymer material base layer and a metal layer formed on at least one surface of the polymer material base layer. The composite current collector may be formed by forming a metal material (aluminum, aluminum alloy, nickel, nickel alloy, titanium, titanium alloy, silver, silver alloy, or the like) on a polymer material substrate, such as a substrate made of polypropylene, polyethylene terephthalate, polybutylene terephthalate, polystyrene, and polyethylene.

In some embodiments, the secondary battery according to the embodiments of the present application may include any one of a battery cell, a battery module, and a battery pack.

The battery cell includes a battery housing and an electrode assembly packaged in the battery housing. The shape of the battery cell is not particularly limited, and it may have a cylindrical shape, a prismatic shape, or any other shape. A battery cell 20 of a prismatic structure is shown in FIG. 6.

In some embodiments, as shown in FIG. 7, the outer packaging of the battery cell 20 may include a housing 21 and a top cover assembly 22. The housing 21 may include a bottom plate and side plates connected to the bottom plate. The bottom plate and the side plates define, in an enclosing manner, an accommodating cavity. The housing 21 is provided with an opening in communication with the accommodating cavity, and the top cover assembly 22 is configured to lid the opening to close the accommodating cavity. The positive electrode plate, the separator film, and the negative electrode plate included in the secondary battery according to the embodiments of the present application may form an electrode assembly 23 through a winding process and/or a stacking process. The electrode assembly 23 is packaged in the accommodating cavity. The electrolyte is infiltrated into the electrode assembly 23. The number of electrode assemblies 23 included in the battery cell 20 may be one or more and may be adjusted according to actual requirements.

Preparation methods for the battery cell 20 are well known. In some embodiments, the positive electrode plate, the separator film, the negative electrode plate, and the electrolyte may be assembled to form a battery cell 20. As an example, the positive electrode plate, the separator film, and the negative electrode plate are subjected to a winding process and/or a stacking process to form an electrode assembly 23. The electrode assembly 23 is placed in an outer packaging and dried, and then the electrolyte is injected. After undergoing processes such as vacuum packaging, standing, formation, and shaping, the battery cell 20 is obtained.

The battery module is formed by assembling the battery cells 20; that is, the battery module may include a plurality of battery cells 20, and the specific number may be adjusted according to the application and the capacity of the battery module.

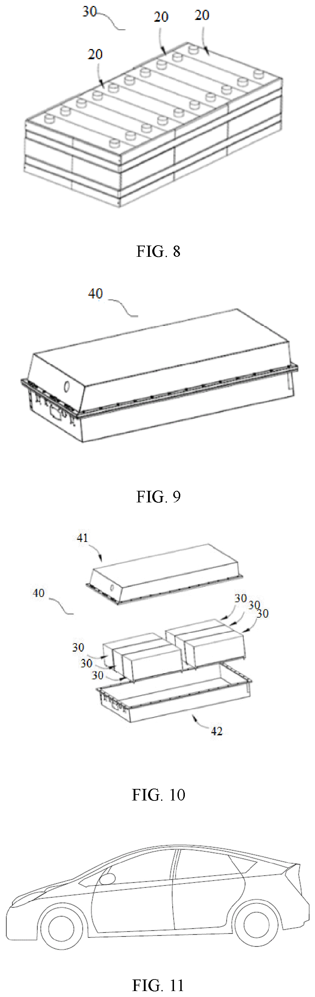

In some embodiments, FIG. 8 is a schematic diagram of a battery module 30 as one example. In the battery module 30, a plurality of battery cells 20 may be sequentially disposed in the length direction of the battery module 30. Certainly, the arrangement may also be in any other manner. Further, the plurality of battery cells 20 may be fixed by fasteners.

Optionally, the battery module 30 may further include a shell having an accommodating space in which the plurality of battery cells 20 are accommodated.

The battery pack is formed by assembling the above battery cells 20; that is, the battery pack may include a plurality of battery cells 20, where a plurality of the battery cells 20 may be assembled into the above battery module 30. The specific number of battery cells 20 or battery modules 30 included in the battery pack may be adjusted according to the application and the capacity of the battery pack.

As shown in the embodiments, FIGs. 9 and 10 are schematic diagrams of a battery pack 40 as one example. The battery pack 40 may include a battery case and a plurality of battery modules 30 disposed in the battery case. The battery case includes an upper case body 41 and a lower case body 42. The upper case body 41 is configured to lid the lower case body 42 and the two form a closed space for accommodating the battery modules 30. The plurality of battery modules 30 may be arranged in any manner in the battery case.

### Electric Device

In a fourth aspect, the embodiments of the present application further provide an electric device. The electric device includes the battery according to the above embodiments of the present application. The battery may be used as a power source for the electric device, or as an energy storage unit for the electric device. Based on the advantages of the battery in the embodiments of the present application, the electric device according to the embodiments of the present application has good cycle performance and safety.

The electric device may be, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like. A secondary battery, a battery module, or a battery pack may be selected based on the use requirements of the electric device.

FIG. 11 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a laptop computer, or the like. The electric device is generally required to be light and thin, and a secondary battery may thus be used as the power source.

### Examples

Hereinafter, examples of the present application are described. The examples described below are illustrative and merely used to explain the present application, and they should not be construed as limiting the present application. The examples without techniques or conditions specified therein are implemented according to techniques or conditions described in the literature in the art or according to product instructions. Reagents or instruments used herein without specified manufacturers are all commercially available conventional products.

### Example 1

A composite separator is provided and includes a base film and a non-woven fabric layer bonded to a first surface of the base film. The material of the base film is polyethylene (PE), and the thickness of the base film is 20 µm; the non-woven fabric material of the non-woven fabric layer is polyester fiber non-woven fabric, and the thickness of the non-woven fabric layer is 10 µm. See Table 1 for details.

The preparation method for the composite separator includes: bonding and laminating the base film and the non-woven fabric material described above to obtain the composite separator.

### Example 2

A composite separator is provided and includes a base film and a non-woven fabric layer bonded to a first surface of the base film, and a first coating is provided between the base film and the non-woven fabric layer. The material of the base film is polyethylene (PE), and the thickness of the base film is 20 µm; the non-woven fabric material of the non-woven fabric layer is polyester fiber non-woven fabric, and the thickness of the non-woven fabric layer is 10 µm; the material of the first coating is an organic nanomaterial, i.e., aramid fiber (polyphenylene sulfide fiber), and the thickness of the first coating is 1 µm. See Table 1 for details.

The preparation method for the composite separator includes: spraying an aramid fiber nanomaterial on the surface of the above base film to form the first coating, and laminating the material of the non-woven fabric layer on the first coating to obtain the composite separator.

### Example 3

A composite separator is provided and includes a base film and a non-woven fabric layer first bonded to the base film. A first coating is provided between the base film and the non-woven fabric layer, and a second surface of the base film distal to the non-woven fabric layer is provided with a second coating. The material of the base film is polyethylene (PE), and the thickness of the base film is 20 µm; the non-woven fabric material of the non-woven fabric layer is polyester fiber non-woven fabric, and the thickness of the non-woven fabric layer is 10 µm; the first coating and the second coating are both made of an organic nanomaterial, i.e., aramid fiber (polyphenylene sulfide fiber), and the first coating and the second coating each have a thickness of 1 µm. See Table 1 for details.

The preparation method for the composite separator includes: distributing and spraying an aramid fiber nanomaterial on two surfaces of the above base film to form the first coating and the second coating, and laminating the material of the non-woven fabric layer on the first coating to obtain the composite separator.

### Examples 4 to 20: See Table 1 for details.

### Comparative Example 1

A composite separator is provided and includes a polyethylene layer and a polypropylene layer that are laminated. The thickness of the polyethylene layer is 20 µm, and the thickness of the polypropylene layer is 15 µm.

### Comparative Example 2

A composite separator is provided and includes a polyethylene layer and a first coating that are laminated. The material of the first coating is an organic nanomaterial, i.e., aramid fiber, the thickness of the first coating is 15 µm, and the thickness of the polyethylene layer is 20 µm.

### Comparative Example 3

A composite separator is provided and includes a base film and a first coating that are laminated. The material of the first coating is an inorganic nanomaterial, i.e., silicon dioxide, and the thickness of the first coating is 15 µm; the base film is a polyethylene layer, and the thickness of the base film is 20 µm.

### Comparative Example 4

A composite separator is provided and includes a base film and a first coating that are laminated. The material of the first coating is an organic nanomaterial, i.e., aramid fiber, and the thickness of the first coating is 15 µm; the base film is made of polyester fiber non-woven fabric, and the thickness of the base film is 20 µm.

### Performance Test

### Performance of composite separator

1.1. Young's modulus: See GB/T7757-2009. Test method: The composite separator was cut into a test sample with a length of 50 mm and a width of 20 mm, and the elastic modulus was tested by using a universal testing machine with a tensile distance of 50 mm and a test speed of 20 mm/min.

1.2. Porosity: See GB/T 24586-2009. Test principle: The true volume of the tested material was accurately measured by using the displacement method of inert gas (helium) with a small molecule diameter in combination with the Archimedes' principle and Boyle's law (PV = nRT), thereby obtaining the porosity of the test composite separator sample.

Calculation formula: Apparent volume V2 = S × H × A; Porosity P = (V2 - V1)/V2 × 100%.

In the formula, S denotes area and is expressed in cm²; H denotes thickness and is expressed in cm; A denotes the number of samples and is expressed in EA; V1 denotes true volume of the sample and is expressed in cm³; V2 denotes the apparent volume of the sample and is expressed in cm³; P denotes the porosity of the sample and is expressed in %.

1.3. Thickness: A micrometer caliper or a microscopic interface thickness measurement method was used.

1.4. Air permeability: Gurley method was used for air permeability analysis, see GB/T 458-2008. Test principle: Time (s) required for air having a volume of 100 CC to pass through the test sample with a certain area.

1.5. Pore size of coating: The approximate pore size range was estimated by observing the structure using a scanning electron microscope (SEM).

Table 1 shows the material compositions and test parameters of the composite separators in the examples and comparative examples.

### (2) Secondary battery cell test

The secondary battery cell, i.e., a sodium-ion full battery, was assembled as follows:

### [Positive electrode plate]

The positive electrode active material, SuperP, and PVDF were uniformly mixed in a mass ratio of 90:5:5 in sequence, followed by slurry preparation, coating, drying, and cold pressing to obtain a positive electrode plate.

### [Negative electrode plate]

An aluminum foil was cut and used as the negative electrode plate.

### [Separator]

The composite separators of the examples and comparative examples were used.

### [Electrolyte]

0.6122 g of sodium perchlorate was weighed out and added to 10 mL of propylene carbonate solvent, and the mixture was stirred until the sodium perchlorate was fully dissolved. Then, fluoroethylene carbonate with a mass fraction of 3% was added as an additive, and the mixture was fully and uniformly stirred and used as the electrolyte.

### [Sodium-ion full battery]

In a glove box protected by an inert gas, the negative electrode plate, the composite separator, and the positive electrode plate (the non-woven fabric layer in the composite separator was disposed proximal to the negative electrode plate) prepared above were tightly laminated in sequence, an electrolyte was added dropwise to completely wet the separator, and then the above laminated part was packaged into a button battery housing to complete the battery assembly, so as to obtain a sodium-ion full battery.

### Charging and discharging test of full battery:

### 2.1. Capacity test of battery

At 25 °C, the prepared battery was first charged to 3.65 V at a constant current of 1C, and further charged to a current of 0.05C at a constant voltage. Then, the battery was discharged to 1.5 V at a constant current of 1C. This constituted one charging and discharging cycle, and the discharge capacity of this cycle was used as the capacity of the battery.

### 2.2. Cycle performance test of battery

At 25 °C, the prepared battery was first charged to 3.65 V at a constant current of 1C, and further charged to a current of 0.05C at a constant voltage. Then, the battery was discharged to 1.5 V at a constant current of 1C. This constituted one charging and discharging cycle, and the discharge capacity of this cycle was used the discharge capacity of the first cycle. The battery was subjected to a cyclic charging and discharging test according to the above method. When the discharge capacity of the battery decreased to 80% of the discharge capacity of the first cycle, the test was stopped, and the number of cycles of the battery was recorded.

2.3. Internal resistance of battery: DCR = ▲U/I, where ▲U denotes voltage change within 30 s of discharge and I denotes discharge current. The results are shown in Table 2. Table 2 shows the test results of the batteries assembled with the composite separators of the examples and comparative examples.

**Table 1**

| Case | Second coating | | | Base film | | First coating | | | Base film + Coating | Non-woven fabric layer | | | Composite separator | | |
|---|---|---|---|---|---|---|---|---|---|---|---|---|---|---|---|
| | Material | Thickness | Pore size | Material | Thickness | Material | Thickness | Pore size | Porosity | Material | Thickness | Porosity | Total porosity | Total air permeability s/100 CC | Young's modulus MPa |
| Example 1 | No | | | PE | 12µm | No | | | 32% | Polyester fiber | 15µm | 51% | 42% | 268 | Length: 9.5 |
| | | | | | | | | | | | | | | | Width: 8.2 |
| Example 2 | | | | PE | 12µm | Aramid fiber | 1 µm | 300 nm | 42% | Polyester fiber | 15µm | 51% | 45% | 326 | Length: 9.7 |
| | | | | | | | | | | | | | | | Width: 8.2 |
| Example 3 | Aramid fiber | 1 µm | 300 nm | PE | 12µm | Aramid fiber | 1 µm | 300 nm | 43% | Polyester fiber | 15µm | 51% | 46% | 369 | Length: 11 |
| | | | | | | | | | | | | | | | Width: 9.8 |
| Example 4 | No | | | PE | 12µm | No | | | 32% | Polyimide fiber | 15µm | 55% | 47% | 267 | Length: 8.7 |
| | | | | | | | | | | | | | | | Width: 7.5 |
| Example 5 | | | | PE | 12µm | | | | 32% | Acetate fiber | 15µm | 53% | 44% | 294 | Length: 8.9 |
| | | | | | | | | | | | | | | | Width: 8 |
| Example 6 | | | | PE | 12µm | | | | 32% | Polyester fiber | 18µm | 53% | 43% | 347 | Length: 9.2 |
| | | | | | | | | | | | | | | | Width: 8 |
| Example 7 | | | | PE | 12µm | | | | 32% | Polyester fiber | 10µm | 49% | 42% | 304 | Length: 9.1 |
| | | | | | | | | | | | | | | | Width: 7.8 |
| Example 8 | | | | PE | 12µm | | | | 32% | Polyester fiber | 5µm | 47% | 41% | 296 | Length: 8.9 |
| | | | | | | | | | | | | | | | Width: 7.9 |
| Example 9 | | | | PE | 12µm | | | | 32% | Polyester fiber | 35µm | 50% | 46% | 389 | Length: 8.6 |
| | | | | | | | | | | | | | | | Width: 8 |
| Example 10 | | | | PE | 12µm | Aramid fiber | 4 µm | 300 nm | 45% | Polyester fiber | 15µm | 51% | 43% | 370 | Length: 9.2 |
| | | | | | | | | | | | | | | | Width: 8 |
| Example 11 | | | | PE | 12µm | Silicon dioxide | 1 µm | 500 nm | 38% | Polyester fiber | 15µm | 51% | 41% | 285 | Length: 9.2 |
| | | | | | | | | | | | | | | | Width: 7.8 |
| Example 12 | | | | PE | 12µm | Sn-PAN | 1 µm | 820 nm | 40% | Polyester fiber | 15µm | 51% | 43% | 290 | Length: 9.0 |
| | | | | | | | | | | | | | | | Width: 8 |
| Example 13 | Sn-PAN | 1 µm | 820 nm | PE | 12µm | Sn-PAN | 1 µm | 820 nm | 42% | Polyester fiber | 18µm | 53% | 46% | 308 | Length: 9.5 |
| | | | | | | | | | | | | | | | Width: 8.5 |
| Example 14 | Silicon dioxide | 1 µm | 500 nm | PE | 12µm | Silicon dioxide | 1 µm | 500 nm | 41% | Polyester fiber | 18µm | 53% | 44% | 329 | Length: 9.2 |
| | | | | | | | | | | | | | | | Width: 8 |
| Example 15 | Silicon dioxide | 1 µm | 500 nm | PE | 12µm | Aramid fiber | 1 µm | 300 nm | 43% | Polyester fiber | 18µm | 53% | 45% | 337 | Length: 10.2 |
| | | | | | | | | | | | | | | | Width: 9.8 |
| Example 16 | Silicon | 1.5 | 550 | PE | 12µm | Aramid | 1.5 | 320 | 44% | Polyester | 18µm | 53% | 44% | 340 | Length: 10.6 |
| | dioxide | µm | nm | | | fiber | µm | nm | | fiber | | | | | Width: 9.4 |
| Example 17 | Silicon dioxide | 2 µm | 580 nm | PE | 12µm | Aramid fiber | 2 µm | 350 nm | 45% | Polyester fiber | 18µm | 53% | 46% | 326 | Length: 9.9 |
| | | | | | | | | | | | | | | | Width: 8.5 |
| Example 18 | Silicon dioxide | 2 µm | 580 nm | PE | 20µm | Aramid fiber | 2 µm | 300 nm | 46% | Polyester fiber | 18µm | 53% | 46% | 345 | Length: 10.5 |
| | | | | | | | | | | | | | | | Width: 9.3 |
| Example 19 | Silicon dioxide | 2 µm | 580 nm | PE | 7 µm | Aramid fiber | 2 µm | 300 nm | 42% | Polyester fiber | 18µm | 53% | 44% | 301 | Length: 9.2 |
| | | | | | | | | | | | | | | | Width: 7.5 |
| Example 20 | Silicon dioxide | 2 µm | 580 nm | PE | 5 µm | Aramid fiber | 2 µm | 300 nm | 42% | Polyester fiber | 18µm | 53% | 45% | 293 | Length: 8.8 |
| | | | | | | | | | | | | | | | Width: 7 |
| Comparative Example 1 | Laminated polyethylene layer (12 µm) and polypropylene layer (15 µm) | | | | | | | | | | | | 31% | 247 | Length: 7.6 |
| | | | | | | | | | | | | | | | Width: 6.2 |
| Comparative Example 2 | Laminated base film (12 µm) and first coating (15 µm), where the base film was made of polyethylene, and the first coating was made of an aramid fiber | | | | | | | | | | | | 35% | 269 | Length: 8.4 |
| | | | | | | | | | | | | | | | Width: 7.2 |
| Comparative Example 3 | Laminated base film (12 µm) and first coating (15 µm), where the base film was made of polyethylene, and the first coating was made of silicon dioxide | | | | | | | | | | | | 38% | 283 | Length: 8 |
| | | | | | | | | | | | | | | | Width: 7.1 |
| Comparative Example 4 | Laminated base film (12 µm) and first coating (15 µm), where the base film was made of polyester fiber non-woven fabric, and the first coating was made of an aramid fiber | | | | | | | | | | | | 50% | 231 | Length: 6.8 |
| | | | | | | | | | | | | | | | Width: 5.4 |

**Table 2**

| Case | Cycle life | DCR(mΩ) |
|---|---|---|
| Example 1 | 900cls@80%SOH | 9.5 |
| Example 2 | 980cls@80%SOH | 9.2 |
| Example 3 | 1300cls@80%SOH | 7.2 |
| Example 4 | 730cls@80%SOH | 10.6 |
| Example 5 | 750cls@80%SOH | 10.4 |
| Example 6 | 880cls@80%SOH | 9.6 |
| Example 7 | 850cls@80%SOH | 9.7 |
| Example 8 | 800cls@80%SOH | 10.1 |
| Example 9 | 780cls@80%SOH | 10.3 |
| Example 10 | 952cls@80%SOH | 9.5 |
| Example 11 | 950cls@80%SOH | 9.7 |
| Example 12 | 920cls@80%SOH | 10.1 |
| Example 13 | 970cls@80%SOH | 9.2 |
| Example 14 | 1020cls@80%SOH | 8.9 |
| Example 15 | 1100cls@80%SOH | 8.4 |
| Example 16 | 1200cls@80%SOH | 8.0 |
| Example 17 | 1080cls@80%SOH | 8.7 |
| Example 18 | 1220cls@80%SOH | 7.6 |
| Example 19 | 870cls@80%SOH | 9.6 |
| Example 20 | 800cls@80%SOH | 10.1 |
| Comparative Example 1 | 700cls@80%SOH | 10.7 |
| Comparative Example 2 | 690cls@80%SOH | 11 |
| Comparative Example 3 | 600cls@80%SOH | 11.4 |
| Comparative Example 4 | 500cls@80%SOH | 13 |

As can be seen from the data in Table 2 above, since the specific composite separators of the examples of the present application were used, compared with the batteries of the comparative examples, the batteries of the examples of the present application exhibited smaller DCR internal resistance and better cycle life. The data of Example 1 and Examples 4 to 9 showed that when the non-woven fabric layer was made of polyester fiber and had a thickness of 10 µm to 18 µm, better performance was achieved. By optimizing the material and thickness of the non-woven fabric layer in the composite separator of the examples of the present application, and further providing the first coating and the second coating on the two surfaces of the base film, the battery performance can be further improved. In Example 3, the non-woven fabric layer was made of polyester fiber and had a thickness of 15 µm, and both the first coating and the second coating were made of aramid fiber and had a thickness of 1 µm, such that the corresponding battery exhibited better performance.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments may be combined in any manner, provided that there is no structural conflict. The present application is not limited to particular embodiments disclosed herein but includes all the technical solutions that fall within the scope of the claims.

## Claims

1. A composite separator, comprising a base film, wherein the base film has a first surface and a second surface that are arranged opposite to each other, and the first surface of the base film is provided with a non-woven fabric layer, the non-woven fabric layer comprising a non-woven fabric material made of an organic polymer fiber, and a porosity of the non-woven fabric layer being at least 40%; and the composite separator is used in a battery, and the non-woven fabric layer is adjacent to a negative electrode plate of the battery.

2. The composite separator according to claim 1, wherein the porosity of the non-woven fabric layer is 47% to 70%.

3. The composite separator according to claim 1 or 2, wherein a thickness of the non-woven fabric layer is 10 µm to 35 µm; and/or
a thickness of the base film is 5 µm to 20 µm.

4. The composite separator according to any one of claims 1 to 3, wherein the organic polymer fiber comprises at least one of a viscose fiber, an acetate fiber, a polyester fiber, a polypropylene fiber, and a polyimide fiber; and/or
a material of the base film comprises polyolefin.

5. The composite separator according to any one of claims 1 to 4, wherein a first coating is provided between the first surface of the base film and the non-woven fabric layer, and/or the second surface of the base film is provided with a second coating, the first coating and the second coating independently comprising at least one of an organic nanomaterial, an inorganic nanomaterial, and an organic-inorganic composite nanomaterial.

6. The composite separator according to claim 5, wherein materials of the first coating and the second coating satisfy one or more of the following (1) to (3):
(1) the organic nanomaterial comprising at least one of an aromatic ring polymer, an aromatic heterocyclic polymer, an aramid fiber, and a polyurethane fiber;
(2) the inorganic nanomaterial comprising at least one of tin dioxide nanoparticles, silicon dioxide nanoparticles, and silver nanoparticles; and
(3) the organic-inorganic composite nanomaterial comprising at least one of a silicon-polyacrylic acid composite material, a silicon-polyacrylonitrile composite material, a tin-polyacrylic acid composite material, and a tin-polyacrylonitrile composite material.

7. The composite separator according to claim 5 or 6, wherein the first surface of the base film is provided with the first coating, the second surface of the base film is provided with the second coating, the first coating comprises the organic nanomaterial, and the second coating comprises the inorganic nanomaterial or the organic-inorganic composite nanomaterial.

8. The composite separator according to any one of claims 5 to 7, wherein a pore size of the first coating is 0.2 µm to 2 µm; and/or
a pore size of the second coating is 0.2 µm to 2 µm.

9. The composite separator according to any one of claims 5 to 8, wherein a porosity of the base film, the first coating, and the second coating as a whole is 28% to 46%; and/or
a thickness of the base film, the first coating, and the second coating as a whole is 7 µm to 25 µm.

10. The composite separator according to any one of claims 1 to 9, wherein the composite separator satisfies one or more of the following (1) to (5):
(1) a porosity of the composite separator being 38% to 55%;
(2) a Young's modulus of the composite separator in a length direction being 8 MPa to 15 MPa;
(3) a Young's modulus of the composite separator in a width direction being 6 MPa to 15 MPa;
(4) a thickness of the composite separator being 15 µm to 55 µm; and
(5) an air permeability of the composite separator being 260 s/100 CC to 390 s/100 CC.

11. A preparation method for the composite separator according to any one of claims 1 to 10, comprising the following step:
subjecting the first surface of the base film and the non-woven fabric layer to lamination treatment to obtain the composite separator.

12. The preparation method according to claim 11, wherein before the first surface of the base film and the non-woven fabric layer are subjected to the lamination treatment, the preparation method further comprises: coating the first surface of the base film with a first slurry containing at least one of the organic nanomaterial, the inorganic nanomaterial, and the organic-inorganic composite nanomaterial to obtain the first coating; and/or
before or after the first surface of the base film and the non-woven fabric layer are subjected to the lamination treatment, the preparation method further comprises: coating the second surface of the base film with a second slurry containing at least one of the organic nanomaterial, the inorganic nanomaterial, and the organic-inorganic composite nanomaterial to obtain the second coating.

13. A battery, comprising a positive electrode plate, a negative electrode plate, and a separator disposed between the positive electrode plate and the negative electrode plate, wherein the separator comprises the composite separator according to any one of claims 1 to 10 or a composite separator prepared by using the preparation method according to any one of claims 11 and 12, and the non-woven fabric layer in the composite separator is disposed between the base film and the negative electrode plate.

14. The battery according to claim 13, wherein the battery is a metal battery.

15. The battery according to claim 13 or 14, wherein the battery comprises at least two electrode assemblies, and no buffer pad is provided between adjacent electrode assemblies.

16. An electric device, wherein the electric device comprises the battery according to any one of claims 13 to 15.
